Europäisches Patentamt

European Patent Office

Office européen des brevets

(11) Publication number: **0 237 302 B1**

# EUROPEAN PATENT SPECIFICATION

(45) Date of publication of patent specification: **15.05.91**    (51) Int. Cl.⁵: **B62K 25/28**

(21) Application number: **87301982.2**

(22) Date of filing: **06.03.87**

(54) Automotive two-wheeled vehicle rear wheel mounting structure.

(30) Priority: **07.03.86 JP 32891/86**
**07.03.86 JP 32892/86**
**07.03.86 JP 32893/86**
**08.03.86 JP 33434/86**
**08.03.86 JP 50793/86**

(43) Date of publication of application:
**16.09.87 Bulletin 87/38**

(45) Publication of the grant of the patent:
**15.05.91 Bulletin 91/20**

(84) Designated Contracting States:
**DE FR GB IT**

(56) References cited:
**DE-B- 1 132 461**
**FR-A- 2 604 411**
**US-A- 4 553 622**

(73) Proprietor: **HONDA GIKEN KOGYO KABUSHIKI KAISHA**
**1-go, 1-ban, Minami-Aoyama 2-chome**
**Minato-ku Tokyo 107(JP)**

(72) Inventor: **Seino, Tatsuji**
**No. 3-26-8, Higashimizuhodai**
**Fujimi-shi Saitama-ken(JP)**
Inventor: **Oshikiri, Nobuo**
**No. 1817-2, Kasahada**
**Kawagoe-shi Saitama-ken(JP)**

(74) Representative: **Leale, Robin George et al**
**FRANK B. DEHN & CO. Imperial House 15-19**
**Kingsway**
**London WC2B 6UZ(GB)**

## Description

The present invention relates to a structure for mounting the driven rear wheel of an automotive two-wheeled vehicle and, more particularly, to such a structure including a cantilever type swing arm.

United States Patent Specification No. 4,553,622 discloses an assembly for supporting the driven wheel of an automotive two-wheeled vehicle, incorporating a cantilever type swing arm which is mounted at its front end to the vehicle body in vertically pivotable fashion and has an axle rotatably supported at its rear end by two bearings. The axle has its opposite ends extending from the respective sides of the rear end of the swing arm by a predetermined amount, one end of the axle fixedly mounting the driven rear wheel and the othe end fixedly mounting a sprocket for transmitting the driving force of the engine to the driven rear wheel by way of a chain.

In order to provide for smooth rotation of the said axle by increasing the span between the said bearings, it has been required to widen the axle-supporting part of the rear end of the swing arm. This has been disadvantageous, however, in that the weight of the swing arm is thereby increased, with a resulting increase in the weight of the parts located below the suspension means for the driven wheel, i.e. unsprung weight.

According to the present invention there is provided an automotive two-wheeled vehicle having a rear wheel mounting structure comprising:

a swing arm having at its rear end a bore extending transversely of the length of the vehicle and having its front end supported on the vehicle body in a vertically swingable manner;

an axle case mounted in said swing arm bore and having an axle-supporting bore extending therethrough transversely of the vehicle, the ends of the axle case projecting from the respective ends of the swing arm bore by a predetermined amount;

axle bearing means disposed in the projecting end portions of said axle case;

an axle rotatably supported in the said axle-supporting bore by way of said bearing means and having each of its ends projecting from the respective ends of said axle case bore by a predetermined amount;

a rear wheel removably mounted to one end portion of said axle where it projects on one side of said swing arm; and

a power transmission member removably mounted to the other end portion of said axle where it projects on the other side of said swing arm, for transmitting the driving force of a power unit of the vehicle to said axle by way of an endless type transmission member.

Two embodiments of the invention will now be described by way of example and with reference to the accompanying drawings, in which:-

Figures 1 to 9 inclusive show a first embodiment of the present invention; in these Figures:-

Fig. 1 is a general view illustrating an automotive two-wheeled vehicle embodying the invention;

Fig 2. is a sectional view taken along the line 2-2 of Fig. 1;

Fig. 3 is an enlarged view illustrating part of the rear wheel-supporting mechanism provided at the rear end of the swing arm;

Fig. 4 is an enlarged sectional view illustrating a needle bearing member;

Fig. 5 is a perspective view showing the rear portion and stand of the vehicle;

Fig. 6 is a sectional view taken along the line 6-6 of Fig. 3;

Fig. 7 is a sectional view taken along the line 7-7 of Fig. 6;

Fig. 8 is a sectional view taken along the line 8-8 of Fig. 3; and

Fig. 9 is an exploded perspective view illustrating means for preventing unscrewing of a nut member shown in Fig. 8;

Figure 10 is a sectional view illustrating part of one conventional means for preventing unscrewing of a nut member;

Figures 11 and 12 show a second embodiment of the prevent invention; in these Figures:-

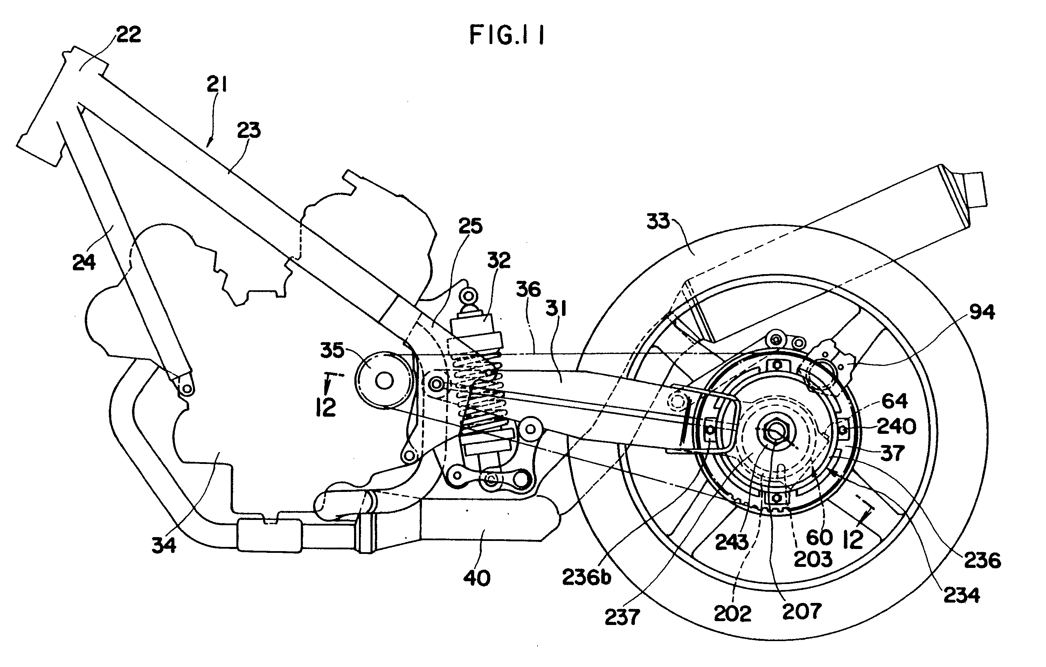

Fig. 11 is a general view illustrating the body and rear portion of an automotive two-wheeled vehicle; and

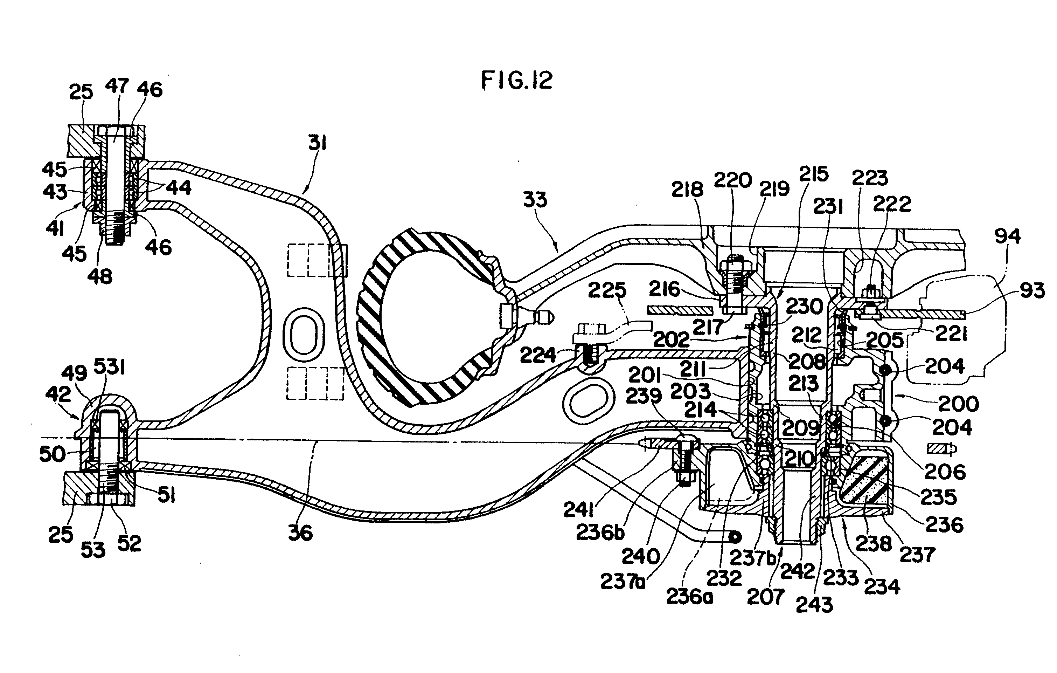

Fig. 12 is a sectional view taken along the line 12-12 of Fig. 11.

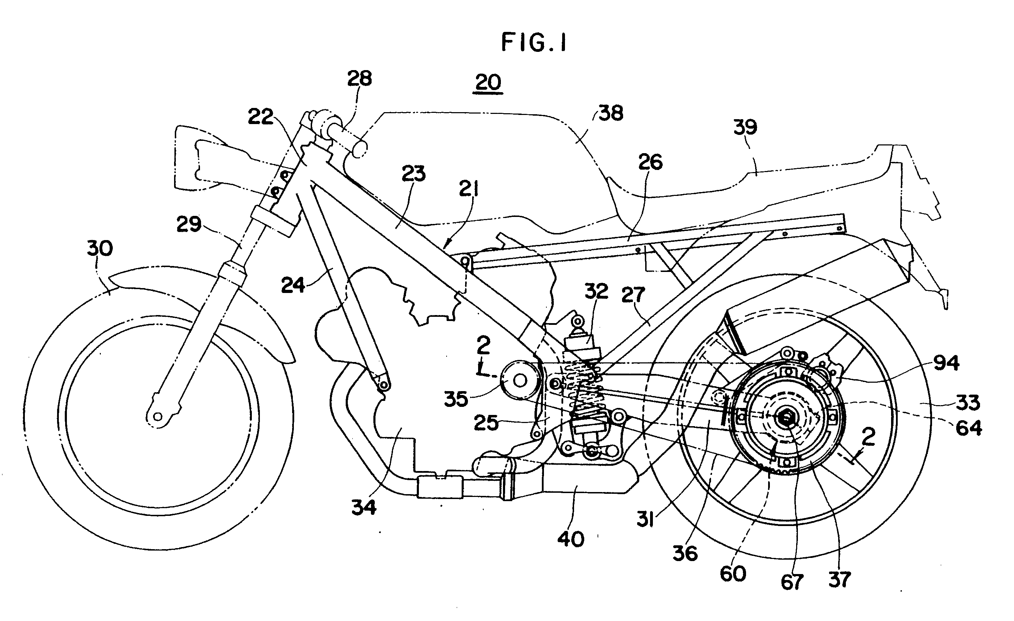

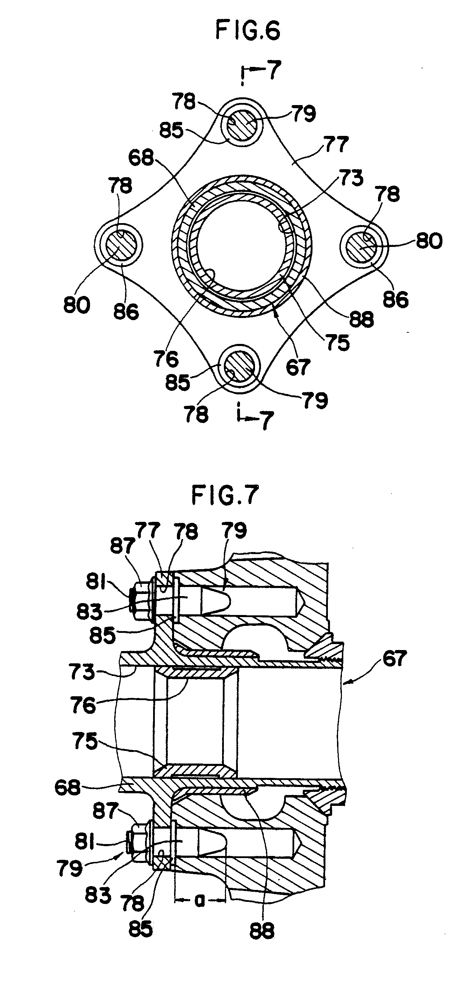

Reference will first be made to the embodiment shown in Figures 1 to 9.

Referring to Figure 1, an automotive two-wheeled vehicle in the form of a motorcycle, shown generally at 20, includes a body frame 21 comprising a head pipe 22, a pair of main frame members 23 having their front ends fixedly secured to the head pipe 22 and their rear ends extending rearwardly, a pair of downtubes 24 having their front ends fixedly secured to the head pipe 22 and their rear ends extending downwardly and angularly, and a pair of gusset plates 25 secured to the rear ends of the main frame members 23. Reference numerals 26 and 27 indicate a pair of seat rails and a pair of seat rail stays, respectively.

The head pipe 22 is associated with a front fork 29 steerable by a handle bar 28, and the fork 29 rotatably carries a front wheel 30 at its lower end.

A driven rear wheel 33 is suspended on the rear portion of the body frame 21 by means of a cantilever type swing arm 31 and a rear suspension unit 32. The body frame 21 is assembled with a power unit 34, the driving power of which is transmitted to a power transmission member in the form of a driven sprocket 37 by way of a driving sprocket 35 and an endless type transmission member in the form of a chain 36. Reference numerals 38, 39 and 40 indicate a fuel tank, a seat and an exhaust pipe respectively.

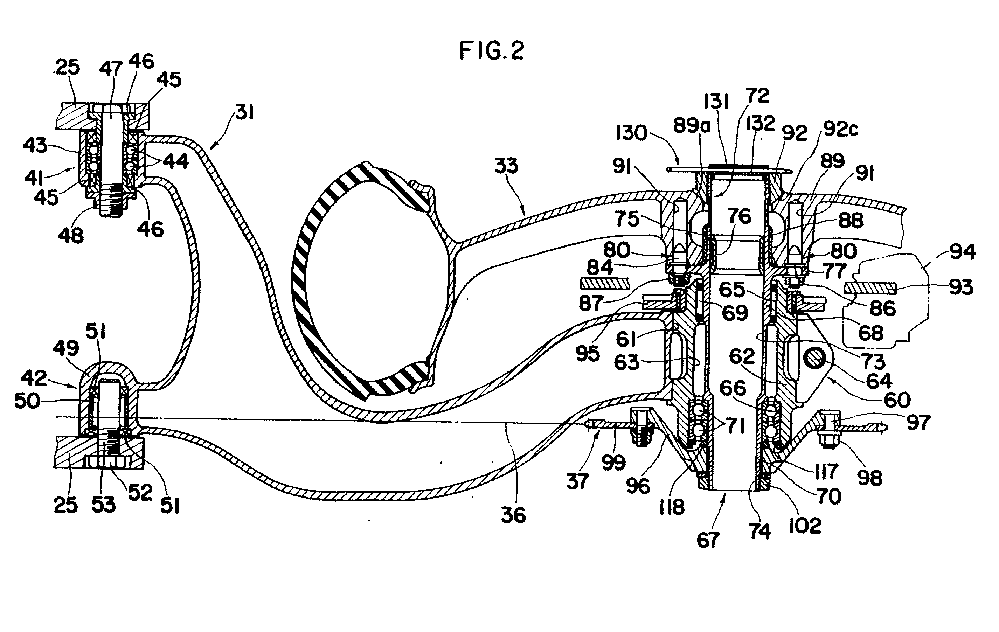

As illustrated in Figure 2, the swing arm 31 is provided at its front end with righthand and lefthand pivot units 41 and 42. The righthand pivot unit 41 is provided with a bearing holder 43 having two sets of build-in ball bearings 44. A pair of dust seals 45 and a pair of flanged collars 46 are provided on the respective sides of the ball bearings 44. The outside face of the righthand pivot unit 41 engages the inside face of the righthand gusset plate 25 and is coupled to the gusset plate by a pivot bolt 47. A threaded end of the pivot bolt 47 projects inwardly of the pivot unit 41 and is clamped with a nut 48. On the other hand, the lefthand pivot unit 42 is provided with a bottomed bearing holder 49 which houses a needle bearing 50, on the respective sides of which a pair of dust seals 51 are provided. The outside face of the lefthand pivot unit 42 engages the inside face of the lefthand gusset plate 25 and is coupled to the gusset plate by a pivot bolt 52. The pivot bolt 52 is provided in the vicinity of its head with a threaded portion 53 for threadedly connecting it with the lefthand gusset plate 25, whereby a pivotal structure is achieved wherein the pivot bolt 52 and the lefthand gusset plate 25 are movable relatively to each other in the thrust direction.

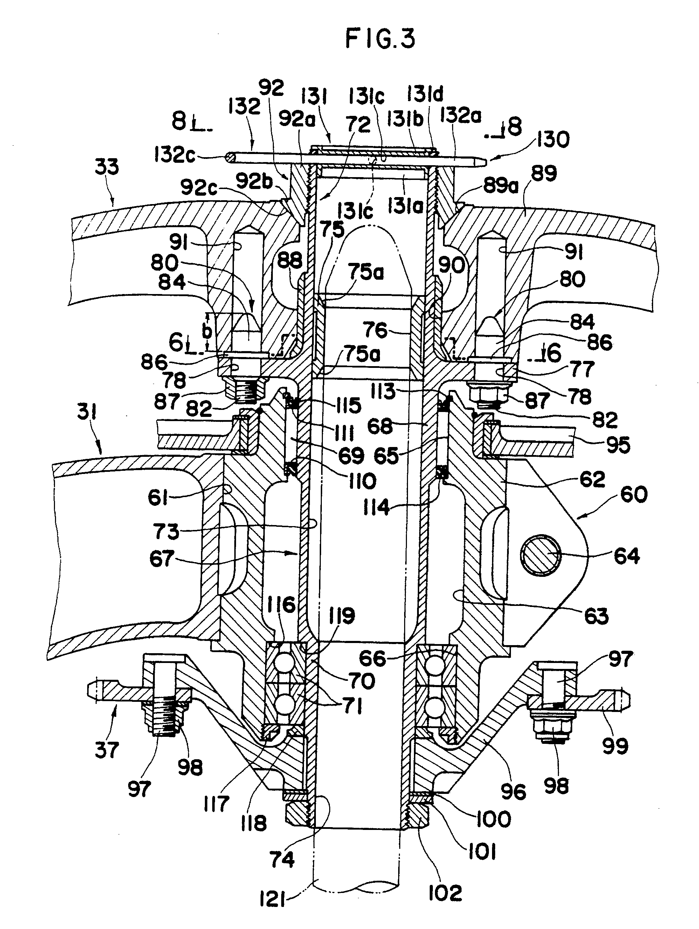

As shown in Figures 2 and 3, the swing arm 31 is formed at its rear end as a split type holder 60 having upper and lower parts and defining a supporting bore 61 extending transversely of the length of the vehicle body. Into the supporting bore 61 there is fitted an axle case 62 having an axle-supporting bore 63 again extending transversely. The length of the axle case 62 is greater than the axial length of the holder 60 formed by the swing arm 31, and extends beyond both ends of the holder 60 by a predetermined amount. The axle case is secured against rotation relative to the holder 60 by clamping together the upper and lower parts of the holder by means of a bolt 64. On the inner faces of the bore 63 in the outwardly extending end portions of the axle case 62, are respectively formed bearing holders 65 and 66. An axle, indicated generally at 67, is removably inserted in the bearing holders 65 and 66 from one side of the swing arm 31 (from the top as seen in Figure 3).

The axle 67 includes a portion 68 of a larger outside diameter and a portion 70 of smaller diameter. The larger diameter portion 68 is rotatably supported in the bearing holder 65 by means of a needle bearing 69, while the smaller diameter portion 70 is rotatably supported in the bearing holder 66 by means of two sets of ball bearings 71. The ends of the axle 67 project from both ends of the axle case 62 by a predetermined amount. The axle 67 is formed with a bore 72, extending transversely of the vehicle body, which has an larger diameter bore portion 73 corresponding to the larger outside diameter portion 68 of the axle, and a smaller diameter bore portion 74 corresponding to the smaller outside diameter axle portion 70. In the larger diameter bore portion 73 is fitted a collar member 75 having a through hole 76 of the same diameter as the smaller diameter bore portion 74.

The larger diameter portion 68 of the axle 67, projecting from one side of the axle case 62, is formed with a flange 77 for mounting the rear wheel 33 as an integral unit with the axle 67. As shown in Figures 3, 6 and 7, the flange 77 is formed with four mounting holes 78 at equal intervals, through which two types of supporting pins 79 and 80, of different lengths, are passed and are fixed to the flange 77.

The supporting pins 79 and 80 are formed at their respective ends with threaded portions 81 and 82 each of a decreased diameter, and their shaft portions are provided with stopper flanges 85 and 86 respectively.

The shaft portions 83 and 84 of the supporting pins 79 and 80 are tapered at their ends opposite to the threaded portions 81 and 82. The length a of the shaft portion 83 of the supporting pins 79, between the stopper flange and the tapered extremity, is greater than the corresponding length b of the shaft portion 84 of the supporting pins 80.

The supporting pins 79, which are each of an identical length, and the supporting pins 80, each of another identical length, are fixedly secured to the flange 77 by inserting their threaded portions 81 and 82 into an opposite pair of mounting holes 78, from the side on which the wheel is to be mounted, screwing nuts 87 onto the threaded portions 81 and 82 projecting away from that side, and clamping the nuts 87, so that the stopper flanges 85 and 86 abut against the side of the flange 77 and the shaft portions 83 project towards the side on which the wheel is to be mounted. By mounting the supporting pins 79 and 80 in this manner it is possible to achieve axial alignment of the supporting pins with respect to the mounting holes 78 with improved precision.

A ring-like spacer sleeve 88 is fitted over the larger diameter portion 68 of the axle 67, and is surrounded by the rear wheel 33. The wheel includes a wheel hub 89 having a bore 90 through which the axle is passed, and which is larger in outside diameter than the larger diameter axle portion 68. The wheel hub 89 is formed with four blind holes 9l for receiving the supporting pins 79 and 80 at equal intervals corresponding to the pin spacing. When the wheel is placed on the larger diameter axle portion 68 and fitted over the spacer sleeve 88, the supporting pins 79 and 80 are received in the holes 9l, and the wheel is then secured on the axle 67 for rotation therewith by means of a nut member 92 which is screwed onto a threaded end portion of the axle 67. In this manner, the attachment and detachment of the rear wheel 33 to and from the axle 67 is precisely and easily achieved, since the supporting pins 79 and 80 have different lengths and the extremities of the pins are tapered. In addition, the provision of the spacer sleeve 88 between the wheel 33 and the axle 67 allows the wheel to be attached to the axle without any play and with improved prevision, and thereby reduces loads applied to the supporting pins 79 and 80. In addition, if a number of spacer sleeves having different thicknesses are made available, it is then possible to attach the rear wheel to the axle with improved precision by using a spacer sleeve suited to the inside diameter of the bore 90 of the hub 89 of the wheel.

Reference numerals 93, 94 and 95 indicate a brake disc fixedly secured to the flange 77, a brake caliper for braking the disc 93, and a bracket for supporting the caliper 94, respectively.

The driven sprocket 37 mounted on the other projecting end of the axle 67 comprises a hub member 96 and a sprocket member 99 attached thereto by means of bolts 97 and nuts 98. The hub member 96 is splined to the projecting end portion of the axle 67 for rotation therewith, and is secured in place by an axle nut l02 screwed onto the axle through washers l00 and l01.

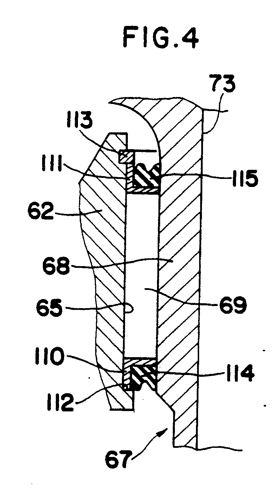

As illustrated in Figure 4, the needle bearing 69 is held at its opposite ends by thrust washers ll0 and lll, and is located relative to the axle case 62 by the thrust washer ll0 abutting against a step ll2 formed on the axle case and the thrust washer lll abutting against a circlip ll3 fitted into the case. Outwardly of the thrust washers ll0 and lll are dust seals ll4 and ll5. The shaft portion 68 of the axle 67 supported by the needle bearing 69 is subject to a large torque during operation of the disc brake. However, the shaft portion 68 is able to resist the large torque produced during braking by virtue of its large diameter and the support provided by the needle bearing 69.

The ball bearing 7l is located relative to the bearing holder 66 by a step ll6 and stopper ring ll7. There is a spacer ll8 between the ball bearing 7l and the hub member 96 of the driven sprocket 37.

The axle 67 is formed with a step ll9 which abuts against the ball bearing 7l to prevent displacement of the axle towards the driven sprocket 37. The axle 67 is also prevented from being displaced towards the rear wheel 33 by the presence of the axle nut l02 on the other end thereof.

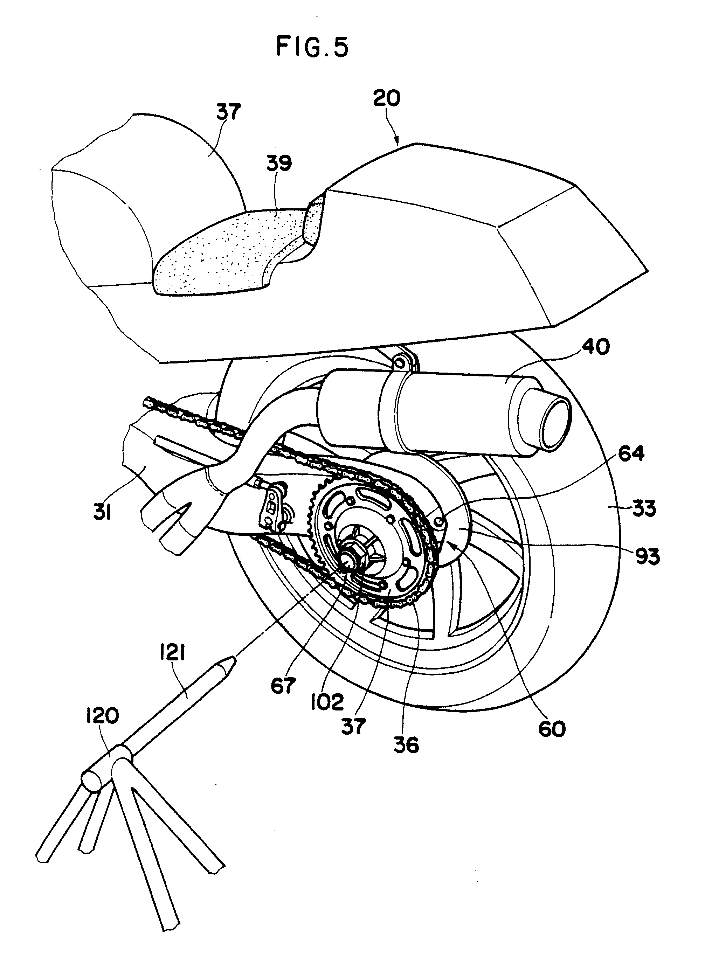

The collar member 75 provided in the axle 67 is used to hold the vehicle 20 in an upright condition by means of stand 120 as shown in Figure 5. More specifically, when a supporting shaft 121 extending from the stand 120 is inserted into the bore 72 of the axle 67, it engages the inside of the smaller diameter bore portion 74 and the through-hole 76 of the collar member 75, whereby the vehicle body is supported in an upright condition, with the rear wheel 33 spaced from the ground.

The supporting shaft 121 is tapered at its end, and the collar 75 is provided with tapered guide faces 75a and 75b at both its ends, so that insertion of the suporting shaft 121 the through-hole 76 is facilitated.

It is thus possible to achieve easy maintenance and ready replacement of parts, when the vehicle 20 is supported in an upright condition by the stand 120.

The nut member 92 which is screwed into the end of the axle 67 to hold the wheel in place is prevented from unscrewing by releasable locking means 130.

As shown in Figures 3, 8 and 9, the nut member 92 includes a hexgonal barrel portion 92a with which a tool is engageable, a flange 92b which is larger in diameter than the barrel portion 92a, and a tapered face 92c formed around the side face of the flange 92b, which face 92c is arranged to engage a tapered face 89a formed around the opening in the wheel hub 89. Tightening of the nut member 92 causes engagement of the tapered face 89a with the tapered face 92c, and hence the wheel hub 89 with the flange 77, whereby the wheel can be fixedly secured to the axle 67 with ease and improved precision.

The nut locking means 130 comprises a pin guide 131 and a split pin 132, as shown in Figures 3, 8 and 9.

The pin guide l3l includes a ring member l3la which is inserted into the open end of the larger diameter bore portion 73 of the axle 67, two ribs l3lb, each having a bore l3lc, which extend diametrically of the ring member l3la as integral parts thereof, and an annular flange l3ld extending integrally from the ring member l3la which abuts against the outer end face of the axle 67. The pin guide l3l is formed of a lightweight material such as plastics or aluminium.

The split pin 132 comprises a straight portion l32a adapted to be inserted through two diametrically opposite pin holes l33 formed in the projecting end portion of the axle 67 and through one or other of the bores l3lc in the pin guide member l3l, a holding portion l32b of arcuate shape which is arranged to engage around the outer periphery of the ring member 131a of the pin guide 131, and a spring portion 132c interconnecting the straight portion 132a and the holding portion 132b.

When the nut member 92 has been screwed onto the projecting end portion of the axle 67, the ring member 131a of the pin guide 131 is inserted in the open end of the axle until the flange 131d abuts against the axle end face, and one of the bores 131c of the ribs 131b is aligned with the pin holes 133 in the axle wall. The straight portion 132a of the split pin 132 is now inserted through the holes 133 and bores 131c, and the holding portion 132b is engaged with the ring member 131a of the pin guide member 131, whereby the nut member 92 is held against unscrewing.

By constructing the locking means 130 as described above, it is possible to rapidly and easily attach and detach the locking means to and from the axle 67.

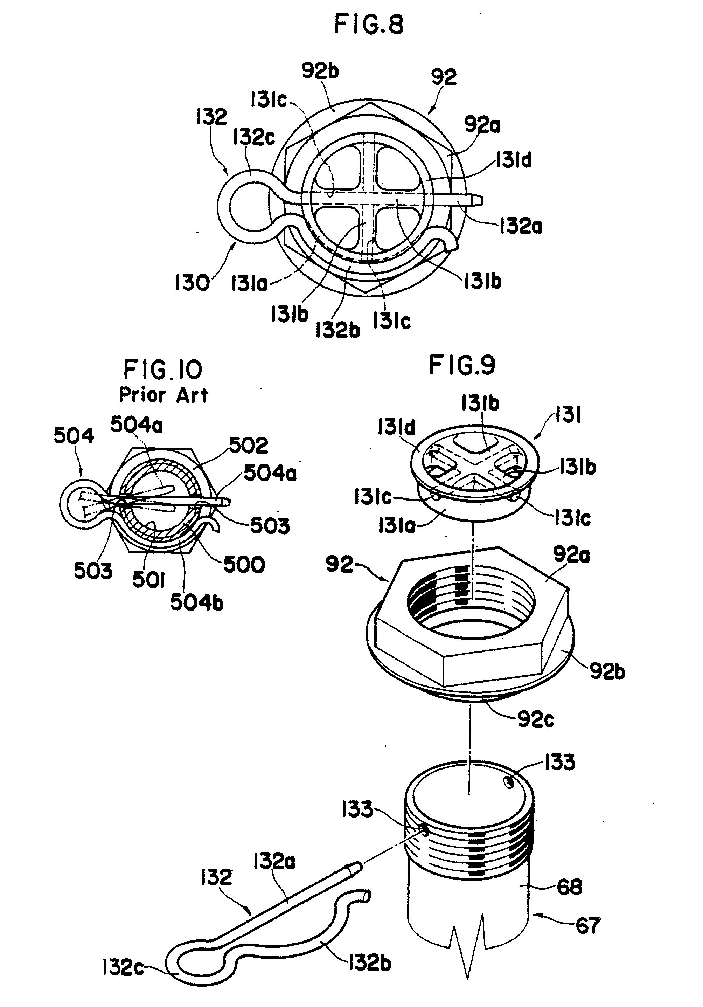

As shown in Figure 10, a conventional means for preventing unscrewing of a nut member 502 screwed onto one end of an axle 500 having a bore 501, comprises a straight portion 504a of a split pin 504 which is inserted into diametrically opposite pin holes 503 formed in the one end of the axle 500 and a holding portion 504b of the split pin 504 which engages around the axle 500. When such a split pin 504 is to be inserted in place, the portion 504a which has been inserted through one pin hole 503 tends to deflect, as indicated by the chain line, so that difficulty is experienced in inserting it through the other pin hole 503. However, in use of the locking means 130 according to the present embodiment, the straight portion 132a of the split pin 132 is guided by one or other of the bores 131c of the pin guide 131 for rapid and assured insertion.

Referring again to Figure 3, the manner of attachment and detachment of the rear wheel 33 and the driven sprocket 37 will be explained.

The axle 67 is inserted, from the end of the axle case 62 in which the needle bearing 69 is mounted, until the step 119 of the axle comes into abutment with the ball bearing 71, and the spacer 118 is then inserted into the other end of the axle projecting from the axle case 62. Next, the hub member 96 of the driven sprocket 37 is engaged on the axle by way of their splines, folowed by the washers 100 and 101. Then the axle nut 102 is screwed on, whilst ensuring that the axle is rotatable in the axle case, whereby any axial movement of the axle is restrained.

The hub 89 of the rear wheel 33 is now engaged on the other end of the axle, over the spacer 88, and the supporting pins 79, 80 on the flange 77 of the axle are received in the bores 91 to support the rear wheel 33 on the axle for rotation therewith. The nut member 92 is now screwed onto the projecting end of the axle to bring the wheel hub 89 into engagement with the flange 77 and thereby attach the rear wheel to the axle. The pin guide 131 is inserted in the open end of the axle, and the split pin 132 is inserted through the axle and the pin guide to prevent unscrewing of the nut member.

To remove the wheel from the axle the split pin 132 is pulled out, the pin guide 131 is removed, and the nut member 92 is unscrewed. The wheel can now easily be removed.

To remove the driven sprocket 37, on the other hand, the axle nut 102 is unscrewed, and the sprocket can then easily be removed together with the washers 101 and 100.

A second embodiment of the invention will now be described with reference to Figures 11 and 12.

In this embodiment the swing arm 31, which is again supported at its front end on the body frame 21 in a vertically pivotable manner, is also formed at its rear end as a split type holder 200 comprising upper and lower parts which define a supporting bore 201 extending transversely of the length of the vehicle body. In the supporting bore 201 of the holder 200 is fitted an axle case 202 having an eccentric axle-supporting bore 203 extending transversely of the vehicle body. The length of the axle case 202 is greater than that of the holder 200 formed in the swing arm 31, and its ends project from the respective ends of the holder 200 by a predetermined amount. The axle case 202 is held against rotation relative to the holder 200 by clamping together the upper and lower parts of the holder by means of bolts 204. On the inner faces of the eccentric axle-supporting bores 203 of the projecting end portions of the axle case 202, there are bearings holders 205 and 206 respectively. An axle 207 is removably inserted in the bearing holders 205 and 206 from one side of the swing arm (from the top as seen in Figure 12).

The axle 207 has its largest diameter at one end, and is formed with steps 208, 209 and 210 of decreasing diameter, i.e. it is tapered step-wise. The axle has its largest diameter portion 211 supported rotatably in the bearing holder 205 by a needle bearing 212 and its first smaller diameter portion 213 supported in the bearing holder 206 by two sets of ball bearings 214, and its ends project from the ends of the axle case 202 by a predetermined amount. The axle has a bore 215 extending transversely of the vehicle body, which is of largest diameter at one end and of gradually decreasing diameter towards the other end.

The largest diameter axle portion 211, projecting from one end of the axle case 202, is formed with a flange 216 for mounting the rear wheel integrally therewith. A plurality of bolts 217 extend through mounting holes formed in the flange 216 at circum-

ferentially equal intervals. A hub 2l8 of the rear wheel 33 abuts with the outer face of the flange 2l6. The wheel hub 2l8 is formed with outwardly opening recesses 2l9 within which nuts 220 are engaged on the bolts 2l7 to connect the flange 2l6 to the wheel hub. A disc 93 of a disk brake device abuts the inner face of the flange 2l6, to which it is secured by bolts 22l and nuts 222. The wheel hub 2l8 is formed with recesses 223 to accommodate the nuts 222. The disk brake device is assembled by engaging a torque rod 225 with a boss 224 formed on the swing arm 3l, attaching a caliper 94 to the boss 224, and engaging the caliper 94 with the disk 93 at the rear portion of the vehicle body.

The needle bearing 212 is located at one end by a thrust washer 230, and held in the bearing holder 205. The thrust washer 230 is provided with a lip seal 231, the lip portion of which abuts with the inside of the flange 216. The axle 207, as supported by the needle bearing 212, is subject to a large torque during disc braking. According to this embodiment, however, the axle 207 can resist such a large torque because of the formation of the portion 211 of the axle with an increased diameter, and because of the support provided by the needle bearing 212.

The ball bearing 214 is located at its end in the bearing holder 206 of the axle case 202 by a circlip 232. On the outside of the circlip 232, a spacer 233 is disposed over the outside of the step 210 of the axle 203, and abuts at its outer end against a ball bearing 235 which supports a damper unit 234 for preventing disengagement of the bearing 235.

The damper unit 234 comprises a cylindrical outer element 236 open at one end, an inner element 237 fitted into the outer element 236, radial damper blades 236a and 237a extending alternately from each of such elements, and a damper rubber 238 inserted between each pair of blades. The outer element 236 is provided therearound with a plurality of mounting lugs 236b to which a driven sprocket 24l is fixedly secured by means of bolts 239 and nuts 240, the sprocket being fitted over the second smaller diameter portion 242 of the axle 207 through the ball bearing 235 so that it is freely rotatable thereon. On the other hand, the boss portion 237b of the inner element 237 of the damper unit 234 is coupled to the axle 207 by a splined engagement, for rotation therewith. An axle nut 243 is screwed onto the end of the axle 207, which extend through the center of the inner element 237 and terminates outwardly thereof. Disengagement of the damper unit 234 is prevented by this axle nut 243. The driving force transmitted from the driving sprocket 35 to the driven sprocket 24l through the chain 36 is transmitted from the outer element 236 of the damper unit 234 to the inner element 237 through the damper blades 236a, the damper rubbers 238, and the damper blades 237a of the inner element 237, in an impact absorbing manner. The rotation of the inner element 237 is transmitted to the axle 207 through their splines, whereby the rear wheel 33 is rotated.

The axle case 202 is fixed against rotation by clamping together the upper and lower parts of the holder 200 of the swing arm 3l, as mentioned above. Accordingly, unclamping of the bolt 204 causes the axle case 202 to be made rotatable, thus enabling the position of the axle 207, carried in the eccentric bore 203, to be adjusted longitudinally with respect to the vehicle body, for adjustment of the tension of the chain 36.

The attachment and detachment of the rear wheel 33 and the damper unit 234, formed integrally with the driven sprocket 24l, will now be explained with referene to Figure l2.

The axle 207 is inserted through the end of the axle case 202 in which the needle bearing 212 is provided, until the step 209 of the axle 207 abuts against the ball bearing 214, and the spacer 233 is then inserted from the other end of the axle. Then the damper unit 234 carrying the driven sprocket 24l is engaged by way of its splines on the axle 207. At this time also, the ball bearing 235 is inserted between the damper unit 234 and the axle 207, to abut against the spacer 233. The axle nut 243 is then screwed onto the end of the axle to prevent disengagement of the damper unit 234, so that the axle is now rotatably supported in the axle case 202, but is held against axial movement.

The disc 93 having been mounted on the flange 2l6 of the axle, the wheel 33 is now brought into abutment with the outer face of the flange 2l6 and mounted on the axle for rotation therewith, being secured by means of the bolts 2l7 and nuts 220.

The wheel can easily be removed from the axle by unscrewing the nuts 220 from the bolts 2l7, whilst the damper unit 234 can easily be removed together with the driven sprocket 24l by unscrewing the nut 243.

In both of the illustrated embodiments of the invention, only the flanged end of the axle, which is required to have increased rigidity, is of an increased diameter, but the other end may be of a smaller diameter, since it does not receive any particularly large load and is thus not required to have so much rigidity. In this respect, the present embodiments provide a structure the weight of which is reduced as much as possible. In addition, owing to the integral structure of the flange and the axle, the rigidity of the flange is enhanced to an extent which enables the brake disc to be attached to it. Unlike the prior art, the brake disc is not located on the side of the rear wheel remote from the vehicle body, and thus replacement of the rear wheel may be carried out while leaving the brake device intact. As a result the structures of the present embodiments are well suited for use in racing motorcycles, in which the rear wheels and other associated parts must be made replaceable as speedily as possible.

The axle used may be varied in the outer diameters of both its ends, and may thus be tapered without any step. If required, one or more steps may be formed on the axle.

As the power transmission member, a belt type member may be used in place of the chain type member.

## Claims

1. An automotive two-wheeled vehicle having a rear wheel mounting structure comprising:

   a swing arm having at its rear end a bore extending transversely of the vehicle and having its front end supported on the vehicle body in a vertically swingable manner;

   an axle case mounted in said swing arm bore and having an axle-supporting bore extending therethrough transversely of the vehicle, the ends of the axle case projecting from the respective ends of the swing arm bore by a predetermined amount;

   axle bearing means disposed in the projecting end portions of said axle case;

   an axle rotatably supported in the said axle-supporting bore by way of said bearing means and having each of its ends projecting from the respective ends of said axle case bore by a predeteremined amount;

   a rear wheel removably mounted to one end portion of said axle where it projects on one side of said swing arm; and

   a power transmission member removably mounted to the other end portion of said axle where it projects on the other side of said swing arm, for transmitting the driving force of a power unit of the vehicle to said axle by way of an endless type transmission member.

2. A vehicle as claimed in claim 1, wherein the said axle has a larger outside diameter portion and a smaller outside diameter portion, and wherein one of said bearing means is a needle bearing which supports said larger diameter portion and the other of said bearing means is a ball bearing which supports said smaller diameter portion.

3. A vehicle as claimed in claim 2, wherein said larger diameter portion of said axle is located towards the rear wheel mounting end thereof.

4. A vehicle as claimed in claim 2 or 3, wherein said axle has an axial bore including a larger diameter portion corresponding to said larger outside diameter portion of said axle and a smaller diameter portion corresponding to said smaller outside diameter portion thereof, said larger diameter portion of the bore containing a collar member having a through-hole of the same diameter as the said smaller diameter portion of the bore.

5. A vehicle as claimed in any preceding claim, wherein a flange is provided on said one projecting end portion of said axle, a hub of said rear wheel is fitted over said one projecting end portion, and a nut member is screwed onto the extremity of said one projecting end portion to hold said wheel hub between said nut member and said flange, whereby said wheel is attached to said axle for rotation therweith.

6. A vehicle as claimed in claim 5, including supporting pins mounted on said flange and received in holes in said wheel hub to prevent rotation of the wheel on the axle.

7. A vehicle as claimed in claim 6, wherein a spacer sleeve is exchangeably disposed between said axle and said wheel hub.

8. A vehicle as claimed in any of claims 5 to 7, wherein the said one projecting end portion of said axle is provided at its extremity with means for preventing said nut member from unscrewing, said means including a pin guide comprising a ring member inserted into the end of the bore in the axle and formed with a rib having a diametrical bore therein, said ring member having an annular flange integral therewith and adapted to abut on the outer end face of the axle, two diametrically opposite pin holes formed laterally in the said projecting end portion of the axle, and a split pin inserted through said holes and through said bore of said rib.

9. A vehicle as claimed in any preceding claim, wherein the axle bore in the said axle case is eccentric relative to the bore in the swing arm, the axle case being rotatable in the swing arm for adjustment of the tension of said endless type transmission member.

## Revendications

1. Véhicule automoteur à deux roues, ayant une structure de montage de roue arrière qui comprend :

un bras oscillant ayant, à son extrémité arrière, un alésage disposé transversalement au véhicule, et dont l'extrémité avant est supportée sur la carrosserie du véhicule afin qu'il puisse osciller verticalement,

un carter d'axe monté dans l'alésage du bras oscillant et ayant un alésage de support d'axe qui le traverse transversalement au véhicule, les extrémités du carter d'axe dépassant des extrémités respectives de l'alésage du bras oscillant d'une quantité prédéterminée,

des paliers d'axe disposés dans les parties d'extrémité en saillie du carter,

un axe supporté afin qu'il puisse tourner dans l'alésage de support d'axe par l'intermédiaire de paliers, et ayant ses extrémités qui dépassent des extrémités respectives de l'alésage du carter d'arbre d'une quantité prédéterminée,

une roue arrière montée de façon amovible sur une première partie d'extrémité de l'axe, à un endroit où il dépasse d'un côté du bras oscillant, et

un organe de transmission d'énergie monté de façon amovible sur l'autre partie d'extrémité de l'axe, à l'endroit où il dépasse de l'autre côté du bras oscillant, afin que la force motrice d'un ensemble moteur du véhicule soit transmise à l'axe par l'organe sans fin de transmission.

2. Véhicule selon la revendication 1, dans lequel l'axe a une partie de diamètre externe relativement grand et une partie de diamètre externe relativement petit, et l'un des paliers est un roulement à aiguilles qui supporte la partie de diamètre relativement grand et l'autre des paliers est un roulement à billes qui supporte la partie de diamètre relativement petit.

3. Véhicule selon la revendication 2, dans lequel la partie de diamètre relativement grand de l'axe est tournée vers l'extrémité de montage de la roue arrière.

4. Véhicule selon la revendication 2 ou 3, dans lequel l'axe a un alésage axial qui comprend une partie de diamètre relativement grand correspondant à la partie de diamètre externe relativement grand de l'axe et une partie de diamètre relativement petit correspondant à la partie de diamètre externe relativement petit de l'axe, la partie de diamètre relativement grand de l'alésage contenant un collier ayant un trou débouchant du même diamètre que la partie d'alésage de diamètre relativement petit.

5. Véhicule selon l'une quelconque des revendications précédentes, dans lequel un flasque est disposé sur la première partie d'extrémité en saillie de l'axe, un moyeu de la roue arrière est monté sur cette partie d'extrémité en saillie, et un écrou est vissé à l'extrémité de cette partie d'extrémité en saillie afin que le moyeu de la roue soit maintenu entre l'écrou et le flasque, si bien que la roue est fixée à l'axe et tourne avec lui.

6. Véhicule selon la revendication 5, comprenant des goujons de support montés sur le flasque et logés dans des trous du moyeu de la roue afin que la roue ne tourne pas sur l'axe.

7. Véhicule selon la revendication 6, dans lequel un manchon d'entretoise est monté de façon interchangeable entre l'axe et le moyeu de la roue.

8. Véhicule selon l'une quelconque des revendications 5 à 7, dans lequel ladite partie d'extrémité en saillie de l'axe a, à son extrémité, un dispositif destiné à empêcher le dévissage de l'écrou, ce dispositif comprenant un guide de goupille qui comporte un organe annulaire introduit à l'extrémité de l'alésage formé dans l'axe et ayant une nervure dans laquelle est réalisé un trou diamétral, l'organe annulaire ayant un flasque annulaire qui en est solidaire et qui est destiné à être en butée contre la face d'extrémité externe de l'axe, deux trous diamétralement opposés étant formés latéralement dans la partie d'extrémité en saillie de l'axe, et une goupille fendue introduite dans les trous et dans le trou de la nervure.

9. Véhicule selon l'une quelconque des revendications précédentes, dans lequel l'alésage de l'axe placé dans le carter d'axe est excentrique par rapport à l'alésage formé dans le bras oscillant, le carter d'axe pouvant tourner dans le bras oscillant afin qu'il permette le réglage de la tension de l'organe sans fin de transmission.

## Ansprüche

1. Selbstfahrendes Zweiradfahrzeug mit einer Hinterradaufhängungsbefestigung umfassend:
einen Schwingarm (31) , der an seinem hinteren Ende eine sich quer zum Fahrzeug erstreckende Bohrung (61;201) aufweist und an seinem Vorderende an dem Fahrzeugkörper (25) vertikal schwenkbar gehalten ist;

ein Achsgehäuse (62), das in der Schwingarmbohrung (61;201) angebracht ist und eine durch dieses sich quer zum Fahrzeug erstreckende achshaltende Bohrung (63;203) aufweist, wobei die Enden des Achsgehäuses von den entsprechenden Enden der Schwingarmbohrung um einen vorbestimmten Betrag vorstehen;

Achslagermittel (69,71;212,214), die in den vorstehenden Endabschnitten des Achsgehäuses angeordnet sind;

eine Achse (67;207), die in der achshaltenden Bohrung durch die Lagermittel drehbar gehalten ist, wobei jedes ihrer Enden von den entsprechenden Enden der Achsgehäusebohrung um einen vorbestimmten Betrag vorsteht;

ein Hinterrad (33), das an dem einen Endabschnitt der Achse, wo diese von einer Seite des Schwingarms hervorsteht, lösbar angebracht ist; und

ein Kraftübertragungsglied (37;241), das an dem anderen Endabschnitt der Achse, wo diese von der anderen Seite des Schwingarms hervorsteht, lösbar angebracht ist, um Antriebskraft von einer Antriebseinheit des Fahrzeugs durch ein endloses Übertragungsglied (36) auf die Achse zu übertragen.

2. Fahrzeug nach Anspruch 1, bei dem die Achse einen Abschnitt (68) mit größerem Außendurchmesser und einen Abschnitt (70) mit kleinerem Außendurchmesser umfaßt, und bei dem eines der Lagermittel ein Nadellager (69) ist, das den Abschnitt mit größerem Durchmesser trägt und das andere der Lagermittel ein Kugellager (71) ist, das den Abschnitt mit kleinerem Durchmesser trägt.

3. Fahrzeug nach Anspruch 2, bei dem der Abschnitt (68) mit größerem Durchmesser der Achse ihrem Hinterradbefestigungsende zugewandt angeordnet ist.

4. Fahrzeug nach Anspruch 2 oder 3, bei dem die Achse eine axiale Bohrung aufweist, die einen Abschnitt (73) mit größerem Durchmesser einschließt, der dem Achsabschnitt (68) mit größerem Durchmesser entspricht, und die einen Abschnitt (74) mit kleinerem Durchmesser einschließt, der dem Achsabschnitt (70) davon mit kleinerem Durchmesser entspricht, wobei der Bohrungsabschnitt (73) mit größerem Durchmesser ein Kragenteil (75) mit einem Durchgangsloch gleichen Durchmessers wie der Bohrungsabschnitt kleineren Durchmessers enthält.

5. Fahrzeug nach einem der vorhergehenden Ansprüche, bei dem ein Flansch (77) an dem einen vorstehenden Endabschnitt der Achse vorgesehen ist, eine Nabe (89) des Hinterrades auf den den einen vorstehenden Endabschnitt aufgepaßt ist und ein Mutterteil (92) auf das Ende des einen vorstehenden Endabschnitts aufgeschraubt ist, um die Radnabe zwischen dem Mutterteil und dem Flansch zu halten, wodurch das Rad an der Achse zur Drehung damit befestigt ist.

6. Fahrzeug nach Anspruch 5, umfassend Tragstifte (80), die an dem Flansch angebracht und in Löchern in der Radnabe aufgenommen sind, um eine Drehung des Rades auf der Achse zu verhindern.

7. Fahrzeug nach Anspruch 6, bei dem eine Abstandsbuchse (88) zwischen der Achse und der Radnabe austauschbar angeordnet ist.

8. Fahrzeug nach einem der Ansprüche 5 bis 7, bei dem der eine vorstehende Endabschnitt der Achse an seinem Ende mit Mitteln (130) versehen ist, um ein Abschrauben des Mutterteils (92) zu verhindern, wobei die Mittel eine Stiftführung (131) einschließen, die ein Ringglied (131a) umfaßt, das in das Ende der Bohrung in der Achse eingesetzt und mit einer Rippe (131b) ausgebildet ist, welche darin eine diametrale Bohrung aufweist, wobei das Ringglied einen damit einteiligen Ringflansch (131d) aufweist und geeignet ist, um sich auf der äußeren Endfläche der Achse abzustützen, zwei diametral gegenüberliegende Stiftlöcher seitlich in dem vorstehenden Endabschnitt der Achse ausgebildet sind und ein Splint (132) durch die Löcher und durch die Bohrung in der Rippe eingesetzt ist.

9. Fahrzeug nach einem der vorhergehenden Ansprüche, bei dem die Achsbohrung (63) des Achsgehäuses (62) relativ zu der Bohrung (61) in dem Schwingarm exzentrisch ist und das Achsgehäuse in dem Schwingarm zur Einstellung der Spannung des endlosen Übertragungsglieds (36) drehbar ist.

FIG.1

FIG.2

EP 0 237 302 B1

EP 0 237 302 B1

# FIG.3

EP 0 237 302 B1

# FIG.4

# FIG.5

## FIG.6

## FIG.7

EP 0 237 302 B1

## FIG.8

## FIG.10
### Prior Art

## FIG.9

16

FIG.11

FIG.12